(19) Europäisches Patentamt
European Patent Office
Office européen des brevets

(11) **EP 1 394 503 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(51) Int Cl.:
***G01B 11/22*** *(2006.01)*

(21) Anmeldenummer: **03018673.8**

(22) Anmeldetag: **21.08.2003**

(54) **Profiltiefenmessvorrichtung**

Measuring device for profile depth

Dispositif pour mesurer la profondeur d'un profil

(84) Benannte Vertragsstaaten:
**AT BE BG CH CY CZ DE DK EE ES FI FR GB GR HU IE IT LI LU MC NL PT RO SE SI SK TR**

(30) Priorität: **29.08.2002 DE 10239765**

(43) Veröffentlichungstag der Anmeldung:
**03.03.2004 Patentblatt 2004/10**

(73) Patentinhaber: **MAHA Maschinenbau Haldenwang GmbH & Co. KG**
**87490 Haldenwang (DE)**

(72) Erfinder: **Knestel, Anton**
**87496 Hopferbach (DE)**

(74) Vertreter: **MERH-IP**
**Matias Erny Reichl Hoffmann**
**Paul-Heyse-Strasse 29**
**80336 München (DE)**

(56) Entgegenhaltungen:
| | |
|---|---|
| **EP-A- 0 547 365** | **EP-A- 0 825 415** |
| **WO-A-96/10727** | **WO-A-98/34090** |
| **DE-A1- 4 316 984** | **GB-A- 2 314 928** |

**Beschreibung**

Die Erfindung betrifft eine Vorrichtung zum Messen der Profiltiefe von rotierenden Fahrzeugreifen und einen Bremsenprüfstand für Kraftfahrzeuge mit vorgenannter Vorrichtung, die eine berührungslose und automatisierte Profiltiefenmessung von rotierenden Fahrzeugreifen ermöglichen und insbesondere eine Messung der Profiltiefe vor, während und/oder nach einer Bremsenprüfung erlauben.

Bei der turnusmäßigen Überprüfung von Kraftfahrzeugen ist es notwendig, eine Vielzahl von Prüfvorgängen durchzuführen. Dazu zählen beispielsweise eine Überprüfung der Bremsleistung, der Beleuchtung, der Stoßdämpfer und der Profiltiefe. Derartige Prüfungen sind in einigen Ländern vom jeweiligen Gesetzgeber in regelmäßigen Abständen vorgeschrieben und werden von autorisierten Prüfanstalten vorgenommen. In Deutschland werden solche Untersuchungen beispielsweise vom TÜV (Technischer Überwachungsverein) oder von der Firma DEKRA AG vorgenommen. Diese Unternehmen setzen üblicherweise Prüfstraßen für die Kraftfahrzeuge ein, in denen das Fahrzeug eine Prüfstation nach der anderen durchläuft, so daß die geforderten Prüfvorgänge durchgeführt werden können. Um die Prüfvorgänge zeitlich zu optimieren, ist es von Vorteil, wenn die einzelnen Prüfvorgänge soweit wie möglich automatisiert sind.

Aus der DE 41 01 921 A1 ist beispielsweise ein Lichtabtastsystem zur Erfassung einer Reifenprofilkontur bekannt. Dieses System weist einen Projektor auf, der einen Lichtstrahl auf das Reifenprofil aussendet, sowie eine Kamera, die das projizierte Lichtmuster erfaßt.

Weiterhin sind mobile optische Meßsysteme bekannt, die per Hand über das Reifenprofil geführt werden, um die Profiltiefe zu bestimmen.

Aus der WO 96/ 10727 ist eine Vorrichtung bekannt, mit der Schädigungen an Reifen sowie die Profiltiefe der Reifen erfasst werden kann.

Die vorgenannten Lösungen des Standes der Technik sind jedoch nicht in der Lage, eine automatisierte Profiltiefenmessung für verschiedenste Profilarten durchzuführen. Insbesondere sind die Verfahren nicht dafür geeignet, eine Profiltiefe eines Fahrzeugreifens bei einem sich auf einem Bremsenprüfstand drehenden Fahrzeugrades zu messen.

Es ist eine Aufgabe der Erfindung, eine Vorrichtung zum Messen der Profiltiefe von rotierenden Fahrzeugreifen und einen Bremsenprüfstand für Kraftfahrzeuge mit dieser Vorrichtung zu schaffen, die eine berührungslose und automatisierte Profiltiefenmessung eines Fahrzeugreifens erlauben und insbesondere eine Profiltiefenmessung vor, während und/oder nach einer Bremsenprüfung des Fahrzeugs ermöglichen.

Die Erfindung wird gemäß den Merkmalen der unabhängigen Patentansprüche gelöst. Die abhängigen Patentansprüche geben vorteilhafte Weiterentwicklungen und Ausführungsformen der Erfindung an.

Erfindungsgemäß kann eine Vorrichtung zum Messen der Profiltiefe von rotierenden Fahrzeugreifen einen Sensor zum Erfassen der Profiltiefe des Fahrzeugsreifens aufweisen, der an einer Positioniereinheit angeordnet ist. Die Positioniereinheit kann von einer Steuereinheit derart angesteuert werden, daß der Sensor parallel zu einer Drehachse des Fahrzeugreifens bewegbar ist. Die Steuereinheit kann weiterhin Meßsignale des Sensors erfassen und die Positioniereinheit zur Erfassung der Profiltiefe geeignet ansteuern.

Der Fahrzeugreifen kann hierbei von einem Fremdantrieb angetrieben werden. Der Fremdantrieb kann beispielsweise durch zumindest eine Antriebsrolle eines Prüfstands realisiert werden.

Durch die Erfindung ist es möglich, die Profiltiefe von Fahrzeugreifen automatisiert und berührungslos bei einem rotierenden Fahrzeugreifen zu erfassen. Die Drehzahl des Fahrzeugreifens kann hierbei einer Drehzahl entsprechen, wie sie bei einer Bremsenprüfung vorliegt. Das Fahrzeugrad kann sich etwa mit 5 km/h drehen (die Umfangsgeschwindigkeit des Fahrzeugrads beträgt 5 km/h), wobei das Fahrzeugrad bei dieser Geschwindigkeit etwa 1 s pro Umdrehung benötigt.

Die Zeitdauer der eigentlichen Profiltiefenmessung kann mit dem Durchmesser des Fahrzeugrades zusammenhängen, da beispielsweise die deutsche Straßenverkehrsordnung besagt, daß das Profil am ganzen Umfang des Fahrzeugreifens gemessen werden muß. Hierzu wären beispielsweise zwei Möglichkeiten denkbar: Man mißt an einer Stelle des Fahrzeugreifens solange, wie eine Umdrehung eines größten anzunehmenden Fahrzeugreifens dauern würde und/oder man berechnet die Rotationsperiode aus dem Abstand vom Fahrzeugreifen zum Sensor. Dies ist dadurch möglich, da das Fahrzeugrad sich in einem Rollprisma eines Antriebswellenpaares auspendelt. Dadurch kann die Meßzeit pro Position solange wie nötig und so kurz wie möglich gewählt werden.

Zur Erfassung des Meßbereichs kann die Steuereinheit die Positioniereinheit derart ansteuern, daß der Sensor die Reifenbreite durch ein Überfahren der Reifenstirnseite parallel zur Drehachse erfaßt. Die Steuereinheit kann innerhalb der ermittelten Reifenbreite einen vorbestimmten Meßbereich bestimmen.

Die Steuereinheit kann die Positioniereinheit weiterhin derart ansteuern, daß der Sensor innerhalb des vorbestimmten Meßbereichs die Profiltiefe des Fahrzeugreifens abtastet und die Steuereinheit daraufhin die Profiltiefe bestimmt.

Beim Überfahren der rotierenden Reifenstirnseite kann die Position von Profilbereichen mit Profillängsrillen und/oder Profilquerrillen des Reifenprofils längs der Drehachse bestimmt werden. Zum Messen der Profiltiefe kann die Positioniereinheit derart angesteuert werden, daß der Sensor den Profilbereich mit den Profilquerrillen und/oder den Profilbereich mit den Profillängsrillen innerhalb des vorbestimmten Meßbereichs abtastet.

Es ist folglich durch die Erfindung möglich, automatisiert den Fahrzeugreifen abzutasten, wobei sowohl die Reifenbreite als auch ein vorbestimmter Meßbereich während der Messung bestimmt werden können. Der Meßbereich ist beispielsweise in Deutschland durch die Straßenverkehrsordnung (StVO, § 36, Abs. 2) vorgegeben. Gemäß dieser Regelung muß das Hauptprofil am ganzen Umfang eine Profiltiefe von mindestens 1.6 mm aufweisen, wobei als Hauptprofil die breiten Profilrillen im mittleren Bereich der Laufflächen gelten, der etwa 3/4 der Laufflächenbreite einnimmt. Die Steuereinheit kann durch ein Überfahren der Reifenstirnseite die Reifen- bzw. Profilbreite bestimmen und dann im wesentlichen 75 % der Laufflächenbreite im mittleren Bereich als vorbestimmten Meßbereich bestimmen. Die Abtastung der Profiltiefe durch den Sensor kann dann in dem vorbestimmten Meßbereich erfolgen.

Die Steuereinheit kann die Positioniereinheit weiterhin derart ansteuern, daß der Sensor, wenn keine Messung durchgeführt wird, in eine Ruheposition außerhalb eines Überfahrbereichs durch den Fahrzeugreifen gefahren werden kann. Dies ist insbesondere dann vorteilhaft, wenn die Fahrzeugreifen feucht oder verschmutzt sind. In diesem Fall könnte beim Überfahren des Meßbereichs durch das Fahrzeug Schmutz auf den Sensor gelangen, der die spätere Messung erschweren oder unmöglich machen könnte.

Nachdem das Fahrzeug beispielsweise in einen Bremsenprüfstand eingefahren ist, und über den Bereich gefahren ist, in dem sich die Profiltiefenmeßvorrichtung befindet, kann die Positioniereinheit den Sensor ohne die Gefahr einer Verschmutzung axial und parallel zur Reifendrehachse in einen Meßbereich fahren, um die entsprechenden Messungen vorzunehmen.

Weiterhin kann der Sensor ein optischer Sensor sein.

Der Sensor kann als optischer Triangulationssensor ausgebildet sein.

Durch das Vorsehen des Sensors als optischer, berührungsloser Sensor kann eine hochauflösende Erfassung der Reifenprofiltiefe bei einem rotierenden Fahrzeugreifen erfolgen.

Der erfindungsgemäß vorgesehene Prüfstand kann die vorgenannte Vorrichtung zum Messen der Profiltiefe enthalten, wobei der Sensor durch die Positioniereinheit über die gesamte Prüfrollenbreite verfahrbar ist und die Profiltiefenmessung vor, während und/oder nach beispielsweise einer Bremsenprüfung durchgeführt werden kann. Dadurch, daß die Positioniereinheit den Sensor über die gesamte Prüfrollenbreite verschieben kann, ist die Positionierung des Fahrzeugs auf der Prüfrolle und/oder den Prüfrollen in axialer Richtung der betreffenden Rollen beliebig, da der Sensor über die Positioniereinheit entsprechend der Position des Fahrzeugreifens verschoben werden kann.

Erfindungsgemäß kann in vorteilhafter Weise eine automatisierte Profiltiefenmessung eines auf einem Prüfstand rotierenden Fahrzeugreifens durchgeführt werden. Bei einer derartigen Prüfung kann es sich um eine Bremsenprüfung eines Bremsenprüfstands handeln. Vor, während und/oder nach der Bremsenprüfung kann die erfindungsgemäße Vorrichtung sämtliche Meßvorgänge durchführen, d.h. sich zunächst aus ihrer Ruheposition in eine Meßposition bringen, die Reifenbreite und die Reifenprofilbereiche erfassen, eine entsprechende Profiltiefenmessung durchführen und die Profiltiefenwerte an eine Steuereinheit bzw. eine übergeordnete Auswerteeinheit weitergeben. Die übergeordnete Auswerteeinheit kann die zentrale Steuereinheit der gesamten Prüfstraße sein.

Der Sensor kann sowohl außerhalb der Rollen, auf denen das zu prüfende Fahrzeugrad aufsteht, als auch innerhalb der Rollen angeordnet sein. Ein außerhalb der Rollen angeordneter Sensor hat den Vorteil, daß ein bereits bestehender Prüfstand einfach nachgerüstet werden kann. Ein zwischen den Rollen angeordneter Sensor ist besser vor Beschädigungen und Verschmutzungen geschützt. Um den Sensor sauber zu halten bzw. von Verschmutzungen zu reinigen, kann dieser durch einen Luftstrahl angeblasen und gereinigt werden. Die Spülluft kann fortlaufend den Sensor anblasen oder von Zeit zu Zeit für eine bestimmte Zeitdauer aktiviert werden.

Im folgenden werden Beispiele von erfindungsgemäßen Ausführungsformen anhand von schematischen Zeichnungen näher erläutert. Es zeigen:

Fig. 1    eine schematische Seitenansicht eines Bremsenprüfstands mit einem Sensor zur Erfassung der Profiltiefe;

Fig. 2    eine schematische Darstellung eines Bremsenprüfstands mit einem Sensor zur Erfassung der Profiltiefe eines Fahrzeugreifens;

Fig. 3    eine schematische Darstellung eines Sensors zur Erfassung der Profiltiefe;

Fig. 4    eine schematische Darstellung des Meßprinzips des Sensors und

Fig. 5    ein Beispiel eines möglichen Ablaufschemas zur Bestimmung der Profiltiefe.

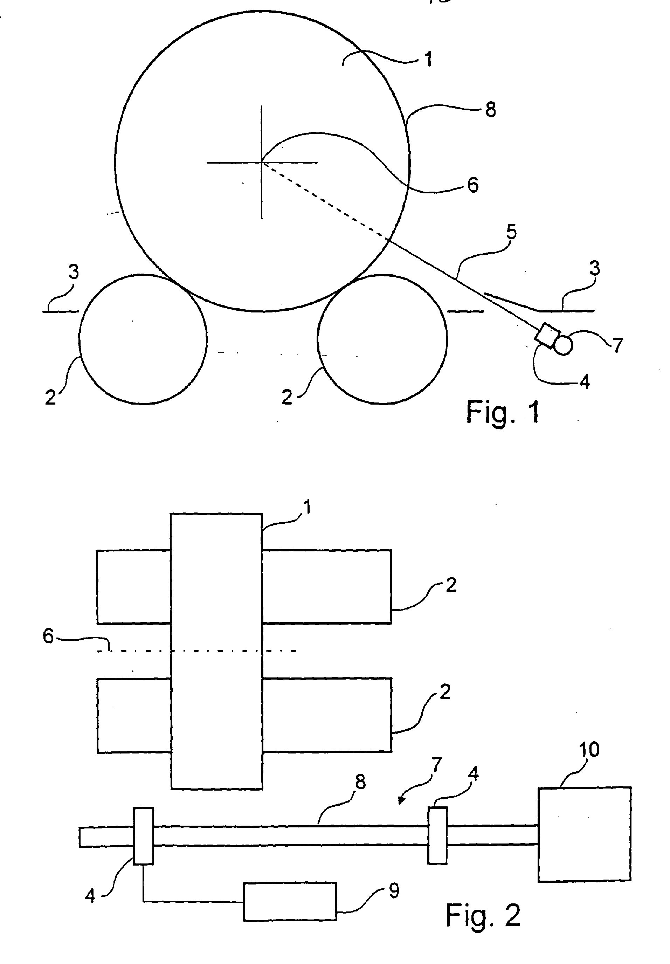

In der Fig. 1 ist eine schematische Ansicht mit einem Fahrzeugreifen 1, zwei Prüfrollen 2 und einer Bodenplatte 3 dargestellt. Der Fahrzeugreifen 1 befindet sich auf den Prüfrollen 2 in einer Prüfposition. Die Bodenplatte 3 dient zum Anfahren des Prüfstands. In dem in Fig. 1 dargestellten Beispiel ist ein Bereich der Bodenplatte 3 etwas angehoben, um einem Sensor 4 eine entsprechende Messung zu erlauben. Der Sensor 4 kann ein optischer Abstandssensor sein, beispielsweise ein Triangulationssensor. Der Sensor 4 sendet hierbei einen Lichtstrahl 5 in Richtung des Fahrzeugreifens 1 aus. Damit das Lichtsignal von dem Sensor 4 zum Fahrzeugreifen 1 gelangen kann, ist die Bodenplatte 3 an der dargestellten Stelle etwas angehoben, so daß der Lichtstrahl 5 auf den Fahrzeugreifen 1 auftreffen kann. Die Bodenplatte 3 kann aus mehreren Elementen bestehen, wobei nur ein Element angehoben werden kann. Der Lichtstrahl 5 bzw. der Sensor 4 ist vorzugsweise derart ausgebildet, daß er auf eine Drehachse 6 des Fahrzeugreifens gerichtet ist.

Der Sensor 4 ist mit einer Positioniereinheit 7 verbunden. Die Positioniereinheit 7 erlaubt ein Verfahren des Sensors 4 parallel zu der Drehachse 6 des Fahrzeugreifens 1. Es ist auch denkbar, daß die Positioniereinheit 7 ein Verstellen des Sensors 4 in Höhenrichtung erlaubt, um den Lichtstrahl 5 bei sich ändernden Fahrzeugreifengrößen immer auf die Drehachse 6 richten zu können.

Das Ausrichten des Lichtstrahls 5 auf die Drehachse 6 bedeutet, daß der Lichtstrahl 5 im wesentlichen senkrecht auf ein Reifenprofil 8 des Fahrzeugreifens 1 auftrifft. Durch das senkrechte Auftreffen des Lichtstrahls 5 auf das Reifenprofil 8 kann eine genaue Reifenprofiltiefenmessung des Fahrzeugreifens 1 erfolgen. Bei nassen Reifen kann dies jedoch zur Folge haben, daß Totalreflektionen auftreten, wodurch eine Messung zumindest erschwert wird. Es kann daher sinnvoll sein, einen leicht anderen Winkel als 90° zu wählen, um diese Probleme zu verhindern. Die Meßgenauigkeit wird dadurch kaum beeinflußt, da dieser Winkel nur als Cosinus-Funktion in die Messung eingeht.

Die Bodenplatte 3 kann anstatt eines angehobenen Bodenplattenteils auch andere Möglichkeiten vorsehen, um den Lichtstrahl 5 des Sensors 4 aus einem Raum unter der Bodenplatte 3 auf das Reifenprofil 8 des Fahrzeugreifens 1 treffen zu lassen. Denkbar wäre hierbei etwa eine schlitzförmige Öffnung der Bodenplatte 3 mit einer Breite, die der Breite der Prüfrollen 2 entspricht. Weiterhin könnte eine Reinigungsanordnung für den Sensor 4 vorgesehen sein, die den Sensor 4 beim Einfahren in die oder in der Ruheposition reinigt. Der vorgenannte Schlitz könnte auch beispielsweise durch eine Klappe oder einen Schieber verschließbar sein, wenn der Fahrzeugreifen über den Schlitz rollt, um eine Verschmutzung des Sensors und der Positioniereinheit etc. zu verhindern.

Die Figur 2 zeigt eine weitere schematische Darstellung mit den Prüfrollen 2 und dem Fahrzeugreifen 1. In der Figur 2 ist die Bodenplatte 3 nicht dargestellt, um eine Möglichkeit zum Verfahren des Sensors 4 darzustellen. Die Positioniereinheit 7 kann aus einem Positionierstab 8 mit einem Trapezgewinde bestehen. Der Sensor 4 kann nun direkt mit einem Innengewinde versehen sein, welches auf dem Positionierstab 8 läuft. An dem Sensor 4 kann jedoch auch ein entsprechendes Verfahrbauteil mit einem Innengewinde angeordnet sein. Es ist auch möglich, eine zum Beispiel pneumatisch oder hydraulisch angetriebene Positioniereinheit 7 einzusetzen. Weiterhin könnte als Kraftübertragungsmittel ein umlaufender Zahnriemen, ein umlaufender Seilzug usw. vorgesehen sein.

Die Positioniereinheit 7 kann weiterhin über ein Weg-Meß-System verfügen, weil sonst beispielsweise beim Vermessen des Fahrzeugreifens 1 gefundene Längsrillen bei der anschließenden Profiltiefenmessung nicht mehr gefunden werden können. Dazu können die unterschiedlichsten linearen Weg-Meß-Systeme zum Einsatz kommen. Beispielsweise können an einer Antriebseinheit 10 der Positioniereinheit 7 ein Rotationssensor, wie z. B. Inkrementalencoder, ein Mergangpotentiometer usw. angeordnet sein. Weiterhin kann der Antrieb über einen Schrittmotor erfolgen. Hierdurch ist eine Wegrückführung nicht notwendig, weil die Steuerung durch die Anzahl der gefundenen Schritte die Position des Sensorkopfes kennt.

Der Sensor 4 kann weiterhin, wie vorstehend schon erwähnt, auch eine Verstelleinrichtung in Höhenrichtung beinhalten. Der Sensor 4 ist mit einer Steuereinheit 9 verbunden. Die Steuereinheit 9 kann Meßsignale des Sensors 4 aufnehmen und ebenso Steuersignale an eine Antriebseinheit 10 senden, um den Positionierstab 8 zu bewegen. Die Steuereinheit 9 kann die Steuereinheit eines Prüfstands und/oder die Steuereinheit einer gesamten Prüfstraße sein. Es ist jedoch auch möglich, daß die Steuereinheit 9 Steueraufgaben nur für die Erfassung der Profiltiefe vornimmt. In diesem Fall wäre die Steuereinheit noch mit einer übergeordneten weiteren Steuereinheit zumindest für den Prüfstand zu verbinden, um der Steuereinheit 9 Informationen darüber mitzuteilen, ob das Fahrzeug auf der oder den Prüfrollen 2 angeordnet ist und ob sich das Fahrzeug in einem entsprechenden Prüfvorgang befindet. Daraufhin kann dann die Steuereinheit 9 beurteilen, ob die Profiltiefenmessung beginnen kann.

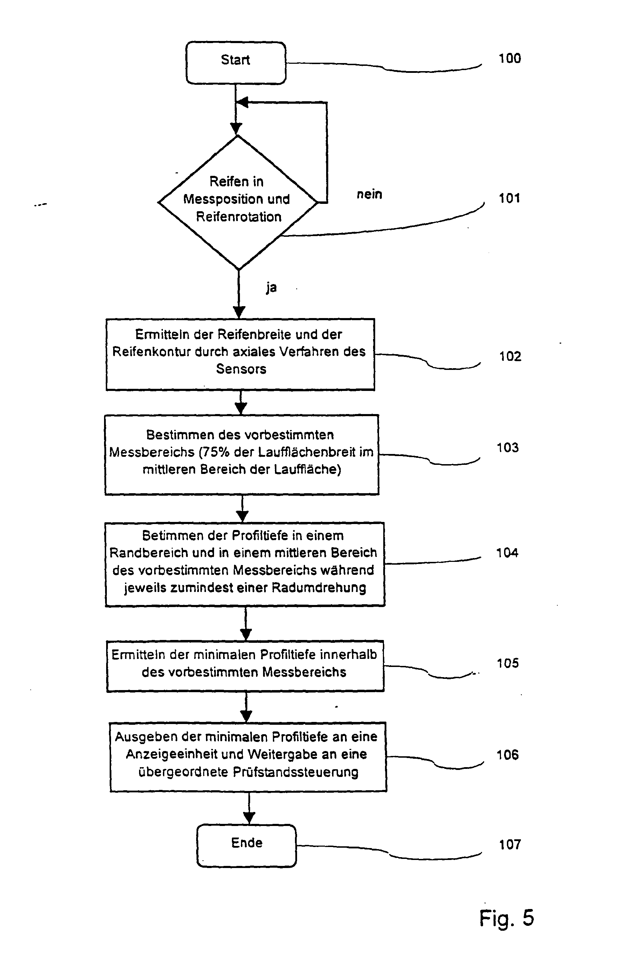

Der Sensor 4 ist in einer Meßposition (links) und in einer Ruheposition (rechts) schematisch dargestellt. In der Ruheposition (rechts) ist der Sensor 4 derart positioniert, daß der Fahrzeugreifen 1 beim Auffahren auf die Prüfrollen 2 oder beim Herunterfahren von den Prüfrollen 2 nicht über den Bereich rollt, in dem sich der Sensor 4 befindet, wodurch Verschmutzungen bzw. Verunreinigungen des Sensors 4 vermieden werden können. Sobald die Steuereinheit 9 mitgeteilt bekommt, daß sich der Fahrzeugreifen 1 in einer Prüfposition befindet, wird der Sensor 4 aus seiner Ruheposition (rechts) in seine Meßposition bewegt. Der Positionierstab 8 und die Antriebseinheit 10 der Positioniereinheit 7 sind derart ausgelegt, daß sie den Sensor 4 über den gesamten möglichen Bereich längs der Drehachse 6 des Fahrzeugreifens 1 bewegen können, in dem sich der Fahrzeugreifen 1 auf den Prüfrollen 2 befinden kann. Der Sensor 4 muß hierbei in jeder möglichen Position des Fahrzeugreifens über die stirnseitigen Ränder des Fahrzeugreifens 1 bewegt werden können, um zunächst eine Reifenbreite bzw. eine Profilbreite des Reifenprofils 8 zu bestimmen. Ein möglicher Meßvorgang wird später in bezug auf die Figur 5 beschrieben.

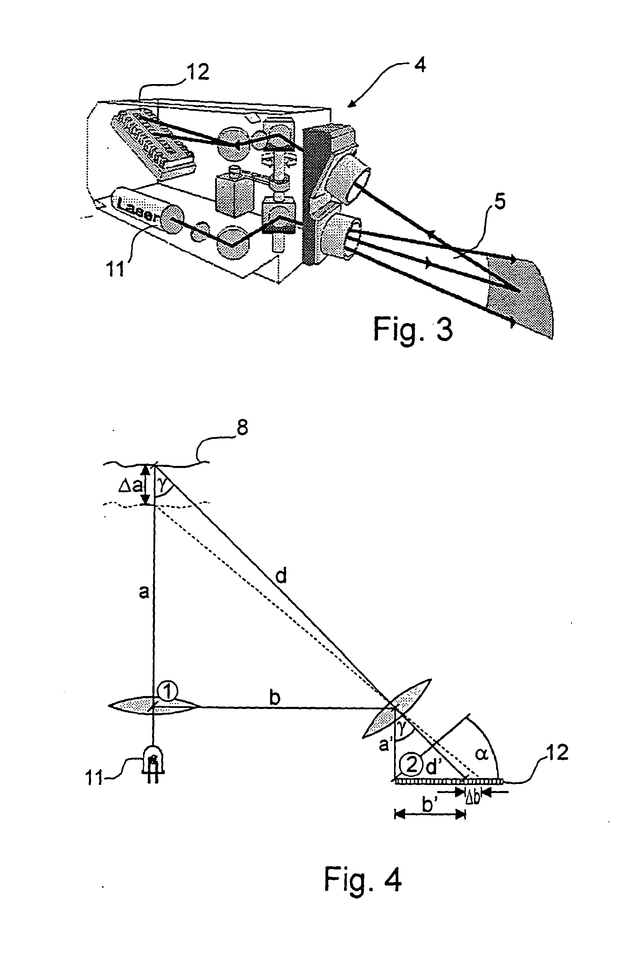

In der Figur 3 ist ein Beispiel eines optischen Triangulationssensors gezeigt. Der Triangulationssensor kann den Abstand eines mit dem Lichtstrahl 5 anvisierten Objektes bestimmen. Der Meßbereich des Sensors 4 liegt beispielsweise zwischen 15 und 30 cm. Eine Lichtquelle 11 sendet hierbei den Lichtstrahl 5 in Richtung auf das Reifenprofil 8 bzw. die Drehachse 6 des Fahrzeugreifens 1 aus. Dieser Lichtstrahl 5 wird diffus an der Objektoberfläche (Reifenprofil 8) reflektiert, wie in Fig. 4 dargestellt. Das Maximum der Abstrahlcharakteristik der Lichtquelle 11 wird in Abhängigkeit von a auf einen Bildsensor 12 in der lateralen Entfernung von der Lichtquelle b + b' projiziert. Hierbei sollte das Maximum gleichzeitig die Mitte der Abstrahlcharakteristik der Lichtquelle sein.

Die Auflösung der Entfernungsmessung kann durch ein Vergrößern eines Kippwinkels $\alpha$ erreicht werden, wobei sich für den dargestellten Kippwinkel $\alpha$ für den Absolutwert von a aufgrund der gezeigten Anordnung wegen der Ähnlichkeit der Dreiecke ① und ② ergibt:

$$a = a' \cdot b/b'.$$

Die Bildverschiebung $\Delta b$ auf dem Bildensor 12 kann bei einem bekannten Triangulationswinkel $\gamma$ und einem Abbildungsmaßstab d/d' sowie einem Objektversatz $\Delta a$ mit

$$\Delta a = \Delta b \cos\alpha \frac{d}{d' \sin\gamma}$$

angegeben werden. In der Figur 3 ist ein eindimensionales Photosensorarray als Bildsensor 12 angegeben. Es können als Bildsensor 12 PSD(PhotoSensing Detection)- und CCD(Charge Coupled Device)-Elemente verwendet werden. Als Lichtquelle 11 kann beispielsweise ein LED oder eine Laserdiode Verwendung finden.

Es ist weiterhin möglich, eine bewegliche Spiegeloptik zu verwenden. Dadurch kann eine sogenannte korrelierte Doppelabtastung vorgenommen werden. In Verbindung mit der beweglichen Spiegeloptik könnte dadurch eine zweidimensionale Vermessung des Reifenprofils 8 möglich werden. Eine genauere Erläuterung wird mit Bezug auf die Figur 5 vorgenommen.

Das Empfängerelement des Sensors 4 kann auch doppelt ausgeführt werden, was zu verbesserten Meßergebnissen führen kann, d. h. man hat eine Lichtquelle 11 und zwei in symmetrischem Winkel angeordnete Empfänger bzw. Bildsensoren 12.

Die Figur 5 zeigt ein mögliches Ablaufschema eines Beispiels einer Messung der Profiltiefe.

Nach einem Start des Ablaufs in einem Schritt 100 wird in einem Schritt 101 abgefragt, ob sich der Fahrzeugreifen 1 in einer Meßposition befindet und ob der Fahrzeugreifen 1 rotiert. Diese Informationen können der Steuereinheit 9 von dem Prüfstand, an dem sich das Fahrzeug befindet, übermittelt werden. Die Steuereinheit 9 kann dies jedoch auch durch einen geeigneten eigenen Sensor (nicht dargestellt) erfassen, um die Profiltiefenmessung von sich aus zu beginnen. Wird im Schritt 101 festgestellt, daß entweder der Fahrzeugreifen 1 nicht in der Meßposition ist oder der Fahrzeugreifen 1 keine Rotation durchführt, wird zurück zwischen die Schritte 100 und 101 verzweigt. Befindet sich jedoch der Fahrzeugreifen in der Meßposition und dreht sich der Fahrzeugreifen 1, dann wird zu einem Schritt 102 verzweigt. Bevor in dem Schritt 102 die Reifenbreite und die Reifenkontur durch ein axiales Verfahren des Sensors 4 erfaßt bzw. ermittelt werden, muß der Sensor 4 noch aus seiner Ruheposition (rechts in Fig. 2) in seine Meßposition bewegt werden. Die Meßposition befindet sich dort, wo sich der Fahrzeugreifen 1 auf den Prüfrollen 2 befindet. Die Reifenbreite kann dadurch ermittelt werden, daß der Sensor 4 längs der Drehachse 6 des Fahrzeugreifens 1 bewegt wird, und zwar über die lateralen Grenzen des Fahrzeugreifens 1 hinaus. Die Steuereinheit 9 erfaßt dadurch von dem Sensor 4 Abstandssignale, die im Bereich der Stirnseite des Fahrzeugreifens 1 wesentlich geringer sind als außerhalb eines Bereichs, in dem sich die Stirnseite des Fahrzeugreifens 1 befindet. Dadurch kann die Steuereinheit 9 die Reifenbreite bzw. die Reifenprofilbreite bestimmen. Während der Bestimmung der Reifenbreite kann zudem die Reifenkontur bestimmt werden, d.h. es können Bereiche des Reifenprofils 8 bestimmt werden, die überwiegend Querrillen, Schrägrillen oder Längsrillen aufweisen. Diese Bestimmung erfolgt während zumindest einer Umdrehung des Fahrzeugreifens 1, um den gesamten Reifenumfang abzudecken.

Der Sensor 4 kann so fokussiert werden, daß Profilrillen, die eine Breite von 1 mm oder mehr aufweisen, erfaßt werden können. Dies gilt bei einer Prüfgeschwindigkeit des rotierenden Fahrzeugreifens 1 von etwa 1,5 m/s. Das heißt, daß der Fahrzeugreifen etwa eine Umdrehung in einer Sekunde ausführt, vor, während und/oder nach beispielsweise einer Bremsenprüfung auf dem Bremsenprüfstand.

In einem Schritt 103 wird ein vorbestimmter Meßbereich bestimmt. Der vorbestimmte Meßbereich beträgt beispielsweise 75 % der Laufflächenbreite im mittleren Bereich der Lauffläche des Fahrzeugreifens 1. In einem Schritt 104 wird dann die Profiltiefe in einem Randbereich und in einem mittleren Bereich des vorbestimmten Meßbereichs während jeweils zumindest einer Radumdrehung bestimmt. Sollen keine Längsrillen erfaßt werden und/oder sind keine Längsrillen vorhanden, so wäre der Sensor 4 für die Messung gemäß dem Schritt 104 in einem Bereich zu positionieren, in dem sich Quer- bzw. Schrägrillen befinden. Die Messung könnte dann durchgeführt werden, indem der Sensor 4 durch die Positioniereinheit 7 in seiner Position längs der Drehachse 6 fixiert ist. Gemäß dem Schritt 104 werden zumindest ein Randbereich und eine mittlere Position des Reifenprofils 8 nacheinander ausgewählt, da die gesamte Profilbreite bei der Profiltiefenerfassung abgedeckt werden soll. Weiterhin soll die Profiltiefe über den gesamten Umfang des Fahrzeugreifens 1 bestimmt werden, so daß zumindest eine Radumdrehung notwendig ist, um ein gesamtes Abtasten des Reifenprofils 8 zu ermöglichen.

In einem Schritt 105 wird dann die minimale Profiltiefe innerhalb des vorbestimmten Meßbereichs ermittelt, die minimale Profiltiefe wird dann in einem Schritt 106 beispielsweise an einer Anzeigeeinheit ausgegeben und in der Steuereinheit 9 für eine weitere Auswertung zur Verfügung gestellt. Eine weitere Auswertung kann beispielsweise eine Weitergabe an eine übergeordnete Prüfstandssteuerung sein. In einem Schritt 107 ist der beispielhafte Prüfablauf beendet.

Durch die vorgenannte Erfassung der Profilkontur könnten auch Abweichungen, Unregelmäßigkeiten und andere Defekte des Reifenprofils erfaßt werden. Weiterhin ist es möglich, auch Höhen- bzw. Seitenschläge des Fahrzeugreifens zu ermitteln und auszuwerten. Es ist auch möglich, über in den Reifen eingearbeitete TWIs die für den Reifen zulässige Minimalprofiltiefe zu ermitteln, da dann, wenn durch den Sensor keine TWIs mehr erkannt werden, davon ausgegangen werden kann, daß die minimale Profiltiefe erreicht wurde.

Die Steuereinheit 9 kann beispielsweise bei einer Radumdrehung das minimale Signal, das über einen Differentiator gebildet wird, suchen. Dies würde dem minimalen Profil an diesem Kreisausschnitt des Reifenprofils 8 entsprechen, an dem sich der Sensor 4 gerade befindet. Die Steuereinheit 9 verfährt mit dem maximalen Signal des Sensors 4 in gleicher Weise. Dadurch kann die minimale und maximale Profiltiefe bestimmt werden.

Die Wegsignale des Sensors 4 können differenziert werden, um die Profiltiefe zu bestimmen. Hierbei kann ein elektrotechnisches Differenzieren durchgeführt werden. Der Sensor 4 kann direkt die Profiltiefe ausgeben.

Wenn der Steuereinheit 9 die Reifengröße bzw. der Reifendurchmesser bekannt ist, kann jeder Axialposition des Sensor 4 eine genaue Umfangsposition des Reifenprofils 8 des Fahrzeugreifens 1 zugewiesen werden (zweidimensionale Messung). Dadurch kann ein geometrisches Abbild des Fahrzeugreifens 1 erfaßt werden. Dadurch können beispielsweise auch Längsrillen 8 erfaßt und ausgewertet werden. Zur Erfassung der Längsrillen des Reifenprofils 8 würde der durch den Sensor 4 erfaßte Abstand am äußeren Rand des Längsprofils erfaßt werden, dann in der Mitte der Längsrille und dann wiederum am anderen oberen Rand des Längsprofils. Würden in der Mitte bzw. am Boden der Längsrille TWIs (Trade Wear Indicator) angeordnet sein, so könnten diese ebenso bei der Abstandsmessung ermittelt werden. Der Unterschied zwischen dem erfaßten Abstand am äußeren Rand der Längsrille und am Boden der Längsrille würde dann die Profiltiefe der Längsrille ergeben. Hierbei könnte die Steuereinheit 9 über den gesamten Rotationsumfang des Fahrzeugreifens 1 hinweg ein Abstandsmaximum bzw. ein Profiltiefenminimum ermitteln und dieses dann für die Längsrille als Profiltiefe ausgeben.

Um hierbei die minimale Profiltiefe zu bestimmen, kann die Steuereinheit 9 beim Signal in der Rille über den Radumfang den minimalen Abstand ermitteln.

Bei dem äußeren Bereich des Reifenprofils 8, der mit der Straße in Berührung kommt, kann die Steuereinheit 9 das maximale Abstandssignal über den gesamten Reifenumfang zumindest bei einer Umdrehung des Fahrzeugreifens 1 ermitteln. Dieser maximale Abstandswert wird dann mit dem minimalen Abstandswert der jeweiligen Profilrille beispielsweise am gleichen Kreisausschnitt des Radumfangs verglichen, um die minimale Profiltiefe zu ermitteln.

Als Sensor 4 können auch andere berührungslose Sensoren eingesetzt werden. Denkbar wären etwa Sensoren, die mittels Ultraschall, Infrarot, oder anderen Meßprinzipien arbeiten. Wichtig ist dabei, daß die Auflösung des Sensors ausreicht, um bei der vorgenannten Reifendrehgeschwindigkeit die Profilrillen zu erkennen, d.h. bei einem Vorbeilaufen des Reifenprofils an dem Sensor eine ausreichende Schnelligkeit aufzuweisen, um in die Profilquer- bzw. Schrägrille hinein einen Abstand erfassen zu können.

Weiterhin kann schon beispielsweise beim Vermessen der Reifenbreite erkannt werden, ob es sich um einen Neureifen oder aber um einen Reifen handelt, der nahe an oder gar unter der Mindestprofiltiefe liegt. Entsprechend kann die Prüfprozedur verlängert oder verkürzt werden. Bei einem Reifen, der genauer angeschaut werden muss, werden die beiden äußeren Positionen und zumindest eine mittlere Position untersucht. Bei Neureifen oder nahezu Neureifen kann die Untersuchung nur einer Position entlang des Reifenumfangs ausreichen.

Die vorgenannten Beispiele und Ausführungsformen können in beliebiger Weise miteinander kombiniert werden, ohne den Schutzumfang der vorgenannten Erfindung zu verlassen.

**Patentansprüche**

1. Prüfstand für Kraftfahrzeuge mit einer Vorrichtung zum Messen der Profiltiefe von rotierenden Fahrzeugreifen (1), mit

      - einem Sensor (4) zum Erfassen der Profiltiefe des Fahrzeugreifens (1),
      - einer Positioniereinheit (7), die mit dem Sensor (4) verbunden ist und zumindest parallel zu einer Drehachse (6) des Fahrzeugreifens (1) bewegbar ist,
      - einer Steuereinheit (9), die Meßsignale des Sensors (4) erfaßt und die Positioniereinheit (7) zur Erfassung der Profiltiefe (8) entsprechend ansteuert, und die Steuereinheit (9) die Positioniereinheit (7) derart ansteuert, daß der Sensor (4) zur Ermittlung des Meßbereichs die Reifenbreite durch ein Überfahren der Reifenstirnseite parallel zur Drehachse (6) erfaßt,

   **dadurch gekennzeichnet, daß** die Steuereinheit (9) innerhalb der ermittelten Reifenbreite einen vorbestimmten Meßbereich für die Profiltiefenmessung bestimmt,

wobei die Steuereinheit (9) die Positioniereinheit (7) derart ansteuert, daß der Sensor (4) innerhalb des vorbestimmten Meßbereichs die Profiltiefe des Fahrzeugreifens (1) abtastet und die Steuereinheit (9) die Profiltiefe bestimmt und

die Rotationsperiode des zu prüfenden Fahrzeugreifens (1) aus dem Abstand vom Fahrzeugreifen (1) zum Sensor (4) berechnet wird.

2.  Prüfstand nach Anspruch 1, **dadurch gekennzeichnet, daß** die Steuereinheit (9) beim Überfahren der rotierenden Reifenstirnseite parallel zur Reifenlängsachse die Position von Profilbereichen mit Profillängsrillen und/oder Profilquerrillen des Reifenprofils (8) längs der Drehachse (6) bestimmt und zum Messen der Profiltiefe die Positioniereinheit (7) derart ansteuert, daß der Sensor (4) den Profilbereich mit den Profilquerrillen und/oder den Profilbereich mit den Profillängsrillen innerhalb des vorbestimmten Meßbereichs abtastet.

3.  Prüfstand nach Anspruch 1 oder 2, **dadurch gekennzeichnet, daß** der vorbestimmte Meßbereich im wesentlichen 75 % der Laufflächenbreite im mittleren Bereich der Lauffläche einnimmt.

4.  Prüfstand nach zumindest einem der Ansprüche 1 bis 3, **dadurch gekennzeichnet, daß** die Profiltiefenmessung über den gesamten abgetasteten Umfangsbereich des rotierenden Fahrzeugreifens (1) erfolgt.

5.  Prüfstand nach zumindest einem der Ansprüche 1 bis 4, **dadurch gekennzeichnet, daß** die Steuereinheit (9) die Positioniereinheit (7) derart ansteuert, daß der Sensor (4), wenn keine Messung durchgeführt wird, in eine Ruheposition außerhalb eines Überfahrbereichs des Fahrzeugreifens (1) gefahren wird.

6.  Prüfstand nach zumindest einem der Ansprüche 1 bis 5, **dadurch gekennzeichnet, daß** die Steuereinheit (9) das Anordnen des Fahrzeugreifens (1) in eine Reifenmeßposition erfaßt und daraufhin die Positioniereinrichtung (7) derart ansteuert, daß der Sensor (4) aus der Ruheposition in eine Reifenmeßposition gefahren wird.

7.  Prüfstand nach zumindest einem der Ansprüche 1 bis 6, **dadurch gekennzeichnet, daß** der Sensor (4) ein optischer Triangulationssensor ist.

8.  Prüfstand nach zumindest einem der Ansprüche 1 bis 7, **dadurch gekennzeichnet, daß** der Sensor (4) im wesentlichen auf die Drehachse (6) des Fahrzeugreifens (1) gerichtet ist.

9.  Prüfstand nach zumindest einem der Ansprüche 1 bis 8, **dadurch gekennzeichnet, dass** die Wegsignale des Sensors (4) differenziert werden, um die Profiltiefe zu ermitteln.

10. Prüfstand nach zumindest einem der Ansprüche 1 bis 9, wobei zumindest eine Prüfrolle (2) den Fahrzeugreifen (1) antreibt.

11. Prüfstand nach Anspruch 10, **dadurch gekennzeichnet, daß** der Sensor (4) durch die Positioniereinheit (6) über die gesamte Prüfrollenbreite verfahrbar ist und die Profiltiefenmessung während einer Bremsenprüfung durchgeführt wird.

**Claims**

1.  A test stand for motor vehicles including a device for measuring the profile depth of rotating vehicle tires (1), comprising

    - a sensor (4) for detecting the profile depth of the vehicle tire (1),
    - a positioning unit (7) connected to the sensor (4) and movable at least parallel to a rotating shaft (6) of the vehicle tire (1),
    - a control unit (9) which detects the measuring signals of the sensor (4) and accordingly drives the positioning unit (7) for detecting the profile depth (8), and the control unit (9) drives the positioning unit (7) such that in order to obtain the measuring range the sensor (4) detects the tire width by travelling over the tire front face in parallel to the rotating shaft (6),

    **characterized in that** the control unit (9) determines a predetermined measuring range for the measurement of the profile depth within the obtained tire width,

    the control unit (9) driving the positioning unit (7) such that the sensor (4) scans the profile depth of the vehicle tire (1) within the predetermined measuring range and the control unit (9) determines the profile depth, and

    the rotation period of the vehicle tire (1) to be tested being calculated from the distance of the vehicle tire (1) to the sensor (4).

2.  The test stand according to claim 1, **characterized in that** the control unit (9) determines the position of profile ranges having profile longitudinal grooves and/or profile transverse grooves of the tire profile (8) along the rotating shaft (6) while travelling over the rotating tire front face and drives the positioning unit (7) for measuring the profile depth such that the sensor (4) scans the profile range having the profile transverse grooves and/or the profile range having the profile longitudinal grooves within the predetermined measuring range.

3. The test stand according to claim 1 or 2, **characterized in that** the predetermined measuring range substantially takes 75% of the tread width in the middle range of the tread.

4. The test stand according to at least one of claims 1 to 3, **characterized in that** the measurement of the profile depth is performed across the entire scanned peripheral range of the rotating vehicle tire (1).

5. The test stand according to at least one of claims 1 to 4, **characterized in that** the control unit (9) drives the positioning unit (7) such that the sensor (4) is moved into an idle position outside a travel-over range of the vehicle tire (1) if no measurement is made.

6. The test stand according to at least one of claims 1 to 5, **characterized in that** the control unit (9) detects the arranging of the vehicle tire (1) in a tire measuring position and thereupon drives the positioning unit (7) such that the sensor (4) is moved out of the idle position into a tire measuring position.

7. The test stand according to at least one of claims 1 to 6, **characterized in that** the sensor (4) is an optical triangulation sensor.

8. The test stand according to at least one of claims 1 to 7, **characterized in that** the sensor (4) is substantially directed to the rotating shaft (6) of the vehicle tire (1).

9. The test stand according to at least one of claims 1 to 8, **characterized in that** the displacement signals of the sensor (4) are differentiated to obtain the profile depth.

10. The test stand according to at least one of claims 1 to 9, wherein at least one test roller (2) drives the vehicle tire (1).

11. The test stand according to claim 10, **characterized in that** the sensor (4) can be moved by the positioning unit (6) across the entire test roller width and the measurement of the profile depth is performed during a brake test.

## Revendications

1. Banc d'essai pour véhicules automobiles, comportant un dispositif pour mesurer la profondeur du profil de pneumatiques (1) en rotation, comprenant

    - un capteur (4) de détection de la profondeur du profil du pneumatique (1),
    - une unité de positionnement (7) qui est reliée au capteur (4) et mobile au moins parallèlement à un axe de rotation (6) du pneumatique (1),
    - une unité de commande (9) qui acquiert des signaux de mesure du capteur (4) et qui pilote en correspondance l'unité de positionnement (7) pour détecter la profondeur (8) du profil, et l'unité de commande (9) pilote l'unité de positionnement (7) de telle sorte que pour déterminer la zone de mesure le capteur (4) détecte la largeur du pneumatique par un passage par-dessous la face frontale du pneumatique parallèlement à l'axe de rotation (6),

    **caractérisé en ce que** l'unité de commande (9) détermine une zone de mesure prédéterminée pour la mesure de la profondeur de profil à l'intérieur de la largeur détectée du pneumatique, l'unité de commande (9) pilotant l'unité de positionnement (7) de telle sorte que le capteur (4) balaie la profondeur du profil du pneumatique (1) à l'intérieur de la zone .de mesure prédéterminée et l'unité de commande (9) détermine la profondeur du profil, et la période de rotation du pneumatique (1) à contrôler est calculée à partir de la distance du pneumatique (1) vis-à-vis du capteur (4).

2. Banc d'essai selon la revendication 1, **caractérisé en ce que** lors du passage par-dessus la face frontale en rotation parallèlement à l'axe longitudinal du pneumatique, l'unité de commande (9) détermine la position de zones du profil, présentant des rainures longitudinales et/ou des rainures transversales du profil de pneumatique (8), le long de l'axe de rotation (6) et en ce pour mesurer la profondeur du profil elle pilote l'unité de positionnement (7) de telle sorte que le capteur (4) balaie la zone du profil présentant les rainures transversales et/ou la zone du profil présentant les rainures longitudinales, à l'intérieur de la zone de mesure prédéterminée.

3. Banc d'essai selon la revendication 1 ou 2, **caractérisé en ce que** la zone de mesure prédéterminée occupe sensiblement 75 % de la largeur de la bande de roulement dans la zone médiane de ladite bande de roulement.

4. Banc d'essai selon l'une au moins des revendications 1 à 3, **caractérisé en ce que** la mesure de la profondeur du profil s'effectue sur toute la zone périphérique balayée du pneumatique (1) en rotation.

5. Banc d'essai selon l'une au moins des revendications 1 à 4, **caractérisé en ce que** l'unité de commande (9) pilote l'unité de positionnement (7) de telle sorte que le capteur (4), si aucune mesure n'est effectuée, est déplacé dans une position de repos à l'extérieur d'une zone de passage par-dessus le pneumatique (1).

6. Banc d'essai selon l'une au moins des revendications 1 à 5, **caractérisé en ce que** l'unité de commande (9) détecte l'agencement du pneumatique (1) dans une position de mesure de pneumatique, puis pilote le dispositif de positionnement (7) de telle sorte que le capteur (4) est déplacé de la position de repos jusque dans une position de mesure de pneumatique.

7. Banc d'essai selon l'une au moins des revendications 1 à 6, **caractérisé en ce que** le capteur (4) est un capteur optique de triangulation.

8. Banc d'essai selon l'une au moins des revendications 1 à 7, **caractérisé en ce que** le capteur (4) est dirigé sensiblement sur l'axe de rotation (6) du pneumatique (1).

9. Banc d'essai selon l'une au moins des revendications 1 à 8, **caractérisé en ce que** les signaux de mesure du capteur (4) sont différenciés pour déterminer la profondeur du profil.

10. Banc d'essai selon l'une au moins des revendications 1 à 9, dans lequel au moins un rouleau de contrôle (2) entraîne le pneumatique (1) du véhicule.

11. Banc d'essai selon la revendication 10, **caractérisé en ce que** le capteur (4) est déplaçable par l'unité de positionnement (6) sur toute la largeur du rouleau de contrôle, et la mesure de la profondeur de profil s'effectue pendant une vérification des freins.

Fig. 1

Fig. 2

Fig. 3

Fig. 4

```
              ┌──────────┐
              │  Start   │─────────────────────  100
              └────┬─────┘
                   │    ┌──────┐
                   ▼    │      │
                 ◇◇◇◇◇◇◇◇◇◇◇
               ◇             ◇
              ◇  Reifen in    ◇   nein
             ◇ Messposition und ◇─────────────  101
              ◇ Reifenrotation ◇
               ◇             ◇
                 ◇◇◇◇◇◇◇◇◇◇◇
                   │  ja
                   ▼
```

```
┌─────────────────────────────────────┐
│ Ermitteln der Reifenbreite und der   │
│ Reifenkontur durch axiales Verfahren des │──  102
│            Sensors                   │
└─────────────────┬───────────────────┘
                  ▼
┌─────────────────────────────────────┐
│    Bestimmen des vorbestimmten       │
│ Messbereichs (75% der Laufflächenbreit im │── 103
│   mittleren Bereich der Lauffläche)  │
└─────────────────┬───────────────────┘
                  ▼
┌─────────────────────────────────────┐
│ Betimmen der Profiltiefe in einem    │
│ Randbereich und in einem mittleren Bereich │
│ des vorbestimmten Messbereichs während │── 104
│ jeweils zumindest einer Radumdrehung │
└─────────────────┬───────────────────┘
                  ▼
┌─────────────────────────────────────┐
│ Ermitteln der minimalen Profiltiefe innerhalb │── 105
│   des vorbestimmten Messbereichs     │
└─────────────────┬───────────────────┘
                  ▼
┌─────────────────────────────────────┐
│ Ausgeben der minimalen Profiltiefe an eine │
│ Anzeigeeinheit und Weitergabe an eine │── 106
│   übergeordnete Prüfstandssteuerung  │
└─────────────────┬───────────────────┘
                  ▼
              ┌──────────┐
              │   Ende   │─────────────────────  107
              └──────────┘
```

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4101921 A1

- WO 9610727 A